# EUROPÄISCHE PATENTANMELDUNG

(11) **EP 0 759 529 A2**
(43) Veröffentlichungstag der Anmeldung: **26.02.1997**
(21) Anmeldenummer: 96104927.7
(22) Anmeldetag: 28.03.1996
(51) Int. Cl.: F25D 13/06, F25D 25/04

(54) **Temperiertes Förderband**

(30) Priorität: 05.08.1995 DE 19528816
(71) Anmelder: Fedder, Dieter, 48653 Coesfeld (DE)
(72) Erfinder: Fedder, Dieter, 48653 Coesfeld (DE)
(74) Vertreter: Habbel, Hans-Georg, Dipl.-Ing.

(57) **Zusammenfassung**

Die Erfindung betrifft ein temperiertes Förderband (1), mit einem auf einem Träger (3) bewegbar angeordneten Förderband (1), wobei die Auflagefläche des Trägers (3) für das Förderband (1) temperiert ist und einer an der Oberfläche des Trägers (3) angeordneten Austrittsöffnung (7) für ein Kontaktmittel, einer mit der Austrittsöffnung (7) verbundenen Zuleitung (8) und einer Fördereinrichtung (9) zugunsten eines Förderns von Kontaktmittel aus der Austrittsöffnung (7).

## Beschreibung

Die Erfindung betrifft ein temperiertes Förderband mit einem auf einem Träger bewegbar angeordneten Förderband, wobei die Auflagefläche des Trägers für das Förderband temperiert ist, d. h. gekühlt bzw. erhitzt ist.

Derartige Förderbänder sind bereits bekannt und finden ihren Einsatz u. a. in der Lebensmittelindustrie, wo es darauf ankommt, daß Lebensmittel in einer unterbrochenen Kühl- bzw. Gefrierkette transportiert werden. So werden mittels dieser bekannten gekühlten Förderbänder z. B. gefrorene Lebensmittel von einem Gefrierraum zu einem Kühltransporter transportiert.

Die bekannten gekühlten Förderbänder bestehen z. B. aus Metallelementen, die auf einem Träger bewegbar angeordnet sind, wobei lediglich der eigentliche Träger z. B. durch ein Kältemittel gekühlt wird. Da das Metallband auf der gekühlten Oberseite des Trägers geführt wird, wird aufgrund des Kontaktes des Förderbandes mit dem gekühlten Träger dem Förderband Wärme entzogen.

Aus der DE-AS 24 28 292 ist eine gekühlte Förderbandanlage bekannt, die Kühlflüssigkeit zur Kühlung des Trägers des Förderbandes verwendet.

Diese bekannten gekühlten Förderbänder haben den Nachteil, daß das Förderband nicht ganzflächig auf der gekühlten Oberseite des Trägers aufliegt, sondern bei genauerer Betrachtung lediglich an einigen Punkten. Daher ist der spezifische Wärmeübergang zwischen Förderband und Förderbandträger lediglich gering und wirkt sich in einer unzureichenden Kühlung des Förderbandes aus. Um trotzdem das Förderband ausreichend herabzukühlen, wäre es notwendig, die Temperatur des Kältemittels in dem Förderbandträger weiter herabzusetzen, wobei diese Absenkung der Kältemitteltemperatur kostenaufwendig ist.

Darüber hinaus ist es bei den bekannten gekühlten Förderbändern nachteilig, daß zwischen dem sich bewegenden Förderband und der darunterliegenden Kälteplatte ein hoher mechanischer Verschleiß auftritt, der sich in einer raschen Abnutzung des Förderbandes einerseits und des gekühlten Förderbandträgers andererseits auswirkt und dadurch die Kosten des Betriebes eines gekühlten Förderbandes erhöht.

Die oben beschriebene Problematik ist auch dort gegeben, wo das Förderband erwärmt bzw. erhitzt werden soll.

Der Erfindung liegt die Aufgabe zugrunde, ein temperiertes Förderband auszubilden, das bei geringen Betriebskosten temperiert werden kann und das zudem den Verschleiß des Förderbandes im Bereich des Förderbandträgers herabsetzt.

Diese der Erfindung zugrundeliegende Aufgabe wird durch die Lehre des kennzeichnenden Teiles des Hauptanspruches gelöst.

Mit anderen Worten ausgedrückt wird vorgeschlagen, einen Flüssigkeitsfilm zwischen Förderband und Förderbandträger auszubilden, wobei dieser Flüssigkeitsfilm einerseits den spezifischen Wärmeübergang zwischen Förderband und Förderbandträger verbessert und andererseits den mechanischen Verschleiß des Förderbandes auf dem Förderbandträger minimiert.

Vorteilhafte Ausgestaltungen der Erfindung sind in den Unteransprüchen erläutert.

Ein Ausführungsbeispiel der Erfindung für ein gekühltes Förderband ist nachfolgend in den Figuren beschrieben, wobei
- Fig. 1: im Längsschnitt ein Förderband auf einem Förderbandträger darstellt,
- Fig. 2: zeigt in einer Aufsicht ein Förderband mit Förderbandträger und
- Fig. 3: zeigt in einer Seitendarstellung zwei übereinander angeordnete Förderbänder, wobei das untere Förderband das in Fig. 2 gezeigte Förderband ist.

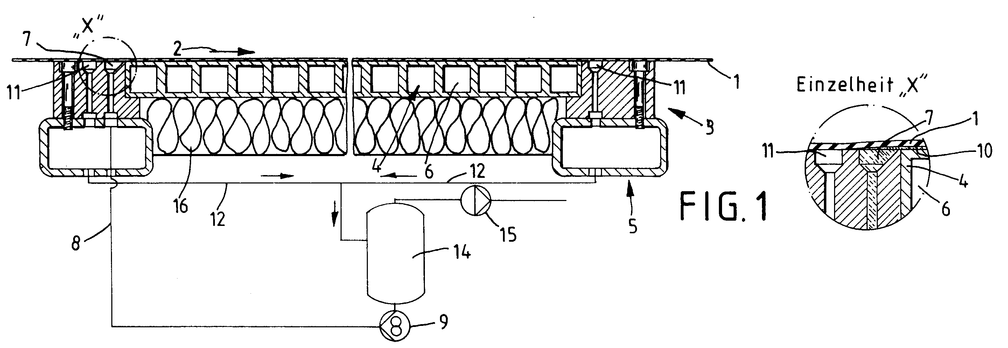

Bezugnehmend auf Fig. 1 ist ein Förderband 1 dargestellt, das sich in der durch den Pfeil 2 gekennzeichneten Bewegungsrichtung bewegt. Das Förderband 1 wird von einem Träger 3 gestützt, wobei der Träger 3 im wesentlichen aus einer Kühlplatte 4 und einer Stützanordnung 5 für die Kühlplatte besteht. Die Kühlplatte 4 weist Kanäle 6 auf, in denen das Kältemittel geführt wird, wobei als Kältemittel z. B. Ammoniak verwendet werden kann. Die Temperatur des Kältemittels kann beispielsweise 40° minus betragen. Falls das Förderband 1 erwärmt werden soll, würde ein erhitztes Wärmemedium durch die Kanäle 6 geleitet.

Für das Wärme- bzw. Kältemittel und das Kontaktmittel werden zwei unterschiedliche Kreisläufe verwendet, um jeweils unterschiedliche Substanzen verwenden zu können und eine größere Freiheit bei der Wahl der jeweiligen Temperaturen zu haben. Getrennte Kreisläufe sind jedoch nicht notwendig.

Bei den bekannten Förderbändern liegt das Förderband direkt auf der Kühlplatte auf, und daher überträgt sich die niedrigere Temperatur zumindest teilweise auf das Förderband, so daß das Förderband temperiert ist. Bei dem in Fig. 1 dargestellten Beispiel wird im vorderen Bereich des Trägers 3 ein Kontaktmittel zwischen das Förderband 1 und die Kühlplatte 4 eingebracht Zum Ausbringen dieses Kontaktmittels wird ein Ausgabespalt 7 verwendet, der über die in Fig. 1 lediglich schematisch dargestellte Zuleitung 8 mit Kontaktmittel versorgt wird. Der für das Ausbringen des Kontaktmittels notwendige Druck wird über eine Pumpe 9 hergestellt, die beispielsweise eine Zahnradpumpe sein kann.

Das in Fig. 1 dargestellte Detail zeigt einen Ausschnitt des Längsschnittes, woraus ersichtlich ist, daß sich das Förderband 1 durch das Zwischenförderband und Kühlplatte eingespritzte Kontaktmittel etwas anhebt und nicht unmittelbar auf der Kühlplatte 4 aufliegt. Es bildet sich ein dünner Kontaktmittelfilm 10 aus, der einen verbesserte spezifische Wärmeübergang zwischen Förderband 1 und Kühlplatte 4 schafft und daher eine intensive Kühlung des Förderbandes bewirkt.

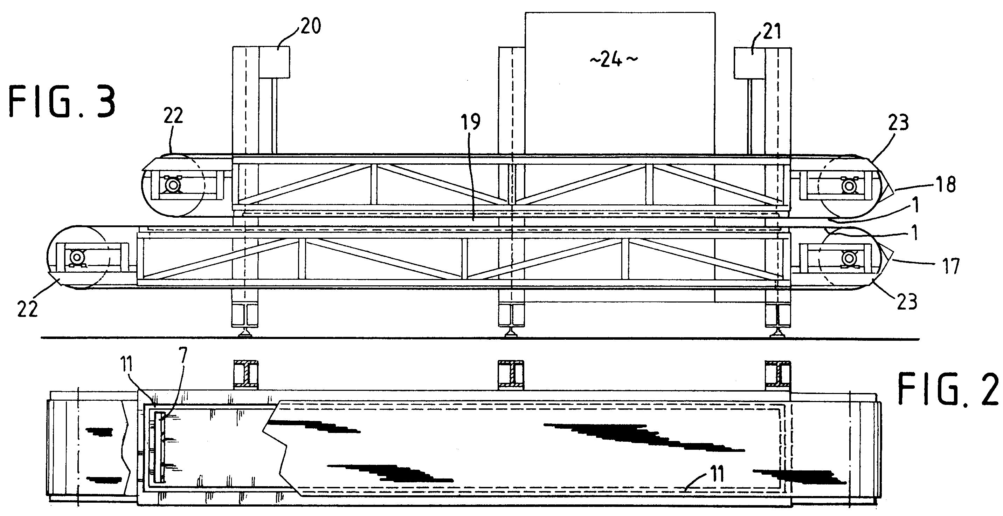

Wie aus der Draufsicht von Fig. 2 ersichtlich ist, ist der Ausgabespalt 7 quer zur Bewegungsrichtung des Förderbandes 1 angeordnet und bewirkt daher eine breitflächige Ausbringung des Kontaktmittels. Es ist vorteilhaft, den Ausgabespalt 7 im vorderen Bereich des Trägers 3 anzuordnen, um eine möglichst intensive Temperierung des Förderbandes 1 zu erreichen. Bei dem Kontaktmittel kann es sich beispielsweise um eine Mischung aus Äthylen-Glykol L und Wasser handelt. Dieses Kontaktmittel selbst braucht nicht gekühlt bzw. erwärmt zu werden, sondern wird unmittelbar durch die Kühlplatte 4 auf die gewünschte Temperatur gebracht.

Um zu verhindern, daß das zwischen Förderband und Träger eingebrachte Kontaktmittel aus dem Bereich des Förderbandes 1 gerät und z. B. die Umgebung des Förderbandes 1 verschmutzt, sind Vorrichtungen vorgesehen, um das aufgebrachte Kontaktmittel wieder zu entfernen. In dem dargestellten Ausführungsbeispiel sind zu diesem Zweck Absaugnuten 11 vorgesehen, die in Bewegungsrichtung des Förderbandes 1 vor dem Ausgabespalt 7 angeordnet sind und sich in Förderrichtung des Förderbandes 1 derart erstrecken, daß der Ausgabespalt 7 weiträumig von Absaugnuten 11 umgeben ist.

Das von dem Ausgabespalt 7 ausgegebene Kontaktmittel wird von dem sich bewegenden Förderband aufgenommen und sorgt für einen guten Wärmeübergang zwischen Förderband 1 und Kühlplatte 4. Am Ende der Kühlplatte 4 sorgt die Absaugenut 11 dafür, daß das Kontaktmittel vom Förderband 1 entfernt wird, um Verluste des Kontaktmittels zu verhindern und ebenfalls ein Verschmutzen des Standortes des Förderbandes 1 zu vermeiden. Die Absaugnut ist vorteilhafterweise quer zur Bewegungsrichtung des Förderbandes 1 angeordnet, um eine möglichst großflächige Aufnahme des Kontaktmittels zu erreichen. Ebenfalls verhindern die umlaufenden Absaugnuten 11 an der Seite dafür, daß seitliche Kontaktmittelverluste entstehen. Wenn die Austrittsöffnung ganz von der Absaugnut 11 umgeben ist, wird eine besonders gute Aufnahme des Kontaktmittels erreicht. Die Absaugnuten 11 sind mit Leitungen 12 verbunden, die zu einem Reservoir 14 führen, wobei der notwendige Unterdruck durch eine mit dem Reservoir 14 verbundene Vakuumpumpe 15 hergestellt wird. Das Reservoir 14 ist wiederum mit der Pumpe 9 verbunden, die das Kontaktmittel zu dem Ausgabespalt 7 befördert, so daß der Kreislauf des Kontaktmittels somit geschlossen ist.

Anstatt einen Unterdruck anzulegen, ist es auch möglich, lediglich einen Abstreifer an der Unterseite des Förderbandes anzuordnen, der als stationäres Teil das an ihnen vorbeistreichenden Förderband abstreift und das Kontaktmittel abführt.

Um eine Isolierung der Kühlplatte 4 an der Unterseite derselben zu erreichen, ist eine Isolierschicht 16 vorgesehen.

Bezugnehmend auf Fig. 3 ist ein weiteres Ausführungsbeispiel dargestellt, wobei zwei Förderanlagen 17 und 18 übereinander angeordnet sind. Die Förderbänder 1 dieser Förderanlagen 17 und 18 sind einander gegenüber angeordnet und bilden einen Spalt 19. Beide Förderanlagen 17 und 18 können entsprechend des in den Fig. 1 und 2 beschriebenen Prinzips temperiert sein, so daß durch die Anordnung entsprechend Fig. 3 eine Temperierung der zu transportierenden Gegenstände sowohl von der Ober- als auch von der Unterseite erfolgen kann.

In Fig. 3 sind darüber hinaus Hubvorrichtungen 20 und 21 dargestellt, über die die obere Förderanlage vertikal bewegt werden kann, um den Spalt 19 zu vergrößern oder zu verkleinern.

Die Förderbänder 1 werden über Umlenkrollen 22 und 23 umgelenkt, wobei diese Umlenkrollen auch in dem Ausführungsbeispiel gemäß Fig. 1 und 2 verwendet werden. Die elektrische Versorgung der Förderanlagen erfolgt über den in Fig. 3 dargestellten Antrieb 24.

## Patentansprüche

1. Temperiertes Förderband, das auf einem Träger bewegbar angeordnet ist, wobei die Auflagefläche des Trägers für das Förderband temperiert ist, gekennzeichnet durch eine zwischen Förderband (1) und Auflagefläche des Trägers (3) angeordnete Schicht bzw. Film (10) aus Kontaktmittel.

2. Temperiertes Förderband gemäß Anspruch 1, gekennzeichnet durch eine an der Oberfläche des Trägers (3) angeordnete Austrittsöffnung für ein Kontaktmittel, einer mit der Austrittsöffnung verbundenen Zuleitung (8) und einer Fördereinrichtung zugunsten eines Förderns von Kontaktmittel aus der Austrittsöffnung.

3. Temperiertes Förderband gemäß Anspruch 2, gekennzeichnet durch die Ausbildung der Austrittsöffnung als Austrittsspalt (7), der quer zur Bewegungsrichtung des Förderbandes (1) angeordnet ist.

4. Temperiertes Förderband gemäß Anspruch 2 oder 3, gekennzeichnet durch die Anordnung der Austrittsöffnung im in Bewegungsrichtung des Förderbandes (1) gesehenen vorderen Bereich des Trägers (3).

5. Temperiertes Förderband gemäß einem der vorhergehenden Ansprüche, gekennzeichnet durch eine Absaugöffnung an der Oberseite des Trägers (3), die über eine Leitung (12) mit einem Unterdruckerzeuger verbunden ist.

6. Temperiertes Förderband gemäß Anspruch 5, gekennzeichnet durch eine Absaugnut (11) als Absaugöffnung, die quer zur Bewegungsrichtung des Förderbandes (1) angeordnet ist.

7. Temperiertes Förderband gemäß Anspruch 5 oder 6 gekennzeichnet durch eine umlaufende Absaugnut, die als Absaugöffnung zumindest einen Teil der der Auflagefläche des Förderbandes (1) auf dem Träger (3) umgibt.

8. Temperiertes Förderband gemäß Anspruch 5 oder 6, gekennzeichnet durch die innerhalb des von der Absaugnut (11) umgebenden Bereiches angeordnete Austrittsöffnung.

9. Temperiertes Förderband gemäß einem der vohergehenden Ansprüche, gekennzeichnet durch eine Kühlplatte (4) in dem Träger (3), in der Kanäle (6) für ein Kühlmittel angeordnet sind.

10. Temperiertes Förderband gemäß einem der vorhergehenden Ansprüche, gekennzeichnet durch zwei verschiedene Kreisläufe für das Kontaktmittel und das Wärme- bzw. Kältemittel.
